# FASCICULE DE BREVET EUROPEEN

(11) **EP 1 180 318 B1**
(45) Date de publication et mention de la délivrance du brevet: **24.11.2004**
(21) Numéro de dépôt: 00936974.5
(22) Date de dépôt: 29.05.2000
(51) Int. Cl.: H04Q 11/04

(54) **INSTALLATION INTERIEURE DE CLIENT MULTI-TERMINAUX BASEE SUR L'ATM**
TEILNEHMERINNENVORRICHTUNG MIT MEHREREN ATM-ENDEINRICHTUNGEN
INTERNAL ATM- BASED MULTI-TERMINAL CLIENT INSTALLATION

(30) Priorité: 03.06.1999 FR 9907172
(43) Date de publication de la demande: 20.02.2002
(73) Titulaire: FRANCE TELECOM, 75015 Paris (FR)
(72) Inventeur: BOURGART, Fabrice, F-22700 Perros Guirec (FR); RAMEL, Gilles, F-22300 Lannion (FR)
(74) Mandataire: Cabinet Martinet & Lapoux
(86) Numéro de dépôt international: PCT/FR2000/001474
(87) Numéro de publication internationale: WO 2000/076255

(56) Documents cités:
- EP-A- 0 715 470
- US-A- 5 392 286
- US-A- 5 467 346
- US-A- 5 504 742

## Description

La présente invention concerne de manière générale des installations de télécommunication terminales de client.

Elle vise à déporter les avantages de la technique de transmission en mode asynchrone ATM (Asynchronous Transfer Mode) jusque dans des terminaux numériques d'une installation terminale de client afin de fédérer au moindre coût par une seule technologie les divers terminaux de télécommunication, audiovisuels et domotiques notamment qu'un client peut posséder.

A cette fin, une installation terminale reliée à une ligne de télécommunication convoyant des cellules de réseau en mode ATM et comprenant des terminaux, est caractérisée en ce qu'elle comprend un moyen de diffusion pour diffuser toutes les cellules de réseau reçues par une voie de réception de la ligne de télécommunication vers les terminaux et un moyen de collecte pour collecter des cellules produites par les terminaux et les transmettre dans une voie d'émission de la ligne de télécommunication. Il est connu du document US-A-5 504 742 d'aiguiller par démultiplexage les cellules vers une installation d'abonné. Cependant cette technique impose des interventions lors de modifications par ajout de terminaux. La présente invention utilise la diffusion. Le mot "diffuser", contrairement au mot "aiguiller" ou "démultiplexer", indique que toutes les cellules correctes provenant de la ligne de télécommunication atteignent un terminal indépendamment de toute adresse de destination contenue dans chaque cellule. Les moyens de diffusion et de collecte forment ensemble une terminaison de ligne de réseau ATM unique pour l'installation terminale de client. La taille des cellules ATM et particulièrement la taille des en-têtes des cellules demeurent inchangées dans l'installation terminal de l'invention et sont celles des cellules normalisées à l'interface d'usager UNI (User Network Interface).

Le moyen de diffusion comprend de préférence un moyen d'entrée pour régénérer des cellules de réseau reçues par la voie de réception dans une liaison numérique de réception, et plusieurs moyens de sortie reliés à la liaison de réception pour retransmettre en synchronisme suivant le sens descendant toutes les cellules régénérées respectivement dans plusieurs boucles locales comprenant au moins un terminal. Le débit dans chaque boucle est en général égal ou inférieur à celui dans la ligne de télécommunication, bien qu'il puisse être supérieur à celui-ci dans des applications d'intercommunication entre les terminaux.

Le moyen de diffusion et le moyen de collecte peuvent être reliés par des boucles locales numériques dans lesquelles sont diffusées toutes les cellules de réseau reçues. Au moins l'une des boucles comprend un terminal, ou plusieurs terminaux en cascade, et/ou au moins un autre ensemble de moyen de diffusion et de moyen de collecte. Dans une boucle, les terminaux, comme des ensembles de moyen de diffusion et moyen de collecte, peuvent être mis en cascade.

Le moyen de collecte comprend de préférence plusieurs moyens d'entrée reliés respectivement aux boucles locales pour synchroniser et régénérer les cellules produites par les terminaux respectifs dans les boucles, plusieurs mémoires tampons pour transmettre cycliquement cellule par cellule les cellules régénérées dans une liaison numérique d'émission en ne lisant que les mémoires tampons contenant au moins une cellule par cycle, et un moyen de sortie pour transmettre les cellules de la liaison numérique d'émission dans la voie d'émission. La lecture cellule par cellule dans les mémoires tampons en sautant les mémoires tampons vides à chaque cycle est rapide et assure un accès égalitaire des boucles locales à la liaison d'émission commune et interne au moyen de diffusion.

De préférence, un moyen dans le moyen de diffusion pour marquer les cellules de réseau provenant de la voie de réception, et un moyen dans le moyen de collecte pour supprimer les cellules de réseau marquées diffusées vers les terminaux sont prévus pour ne retransmettre dans le réseau ATM que les cellules ATM produites localement par les terminaux.

Selon une réalisation préférée, le moyen pour marquer est interconnecté entre le moyen d'entrée et lesdits plusieurs moyens de sortie dans la liaison numérique de réception, et modifie l'état d'un champ prédéterminé dans l'en-tête des cellules de réseau, puis recalcule un champ de contrôle d'erreur de l'en-tête. Le moyen pour supprimer interdit l'écriture des cellules de réseau marquées dans les mémoires tampons et n'autorise l'écriture que des cellules non marquées et produites par les terminaux afin qu'elles soient transmises dans la liaison numérique d'émission du moyen de collecte.

Afin de ne pas multiplier les câblages internes aux locaux du client et des raccordements multiples à chaque terminal, l'invention prévoit par quelques apports fonctionnels uniquement dans les moyens de diffusion et de collecte, une fonction d'intercommunication entre les terminaux de l'installation. L'installation comprend alors un moyen pour aiguiller des cellules d'intercommunication ATM produites localement par des terminaux, depuis le moyen de collecte vers le moyen de diffusion afin de les diffuser avec les cellules de réseau reçues vers les terminaux. Afin de ne pas accroître le coût et la complexité de l'installation, le moyen pour aiguiller des cellules d'intercommunication ATM n'est prévu que dans le moyen de diffusion et de collecte relié directement à la ligne de télécommunication du réseau ATM, lorsque plusieurs couples de moyen de diffusion et de collecte sont reliés en cascade, comme on le verra dans la suite.

Selon une réalisation préférée, le moyen pour aiguiller comprend un premier moyen pour détecter des emplacements vides de cellule dans la liaison numérique de réception, un deuxième moyen pour détecter des cellules d'intercommunication en réponse à des premiers champs d'adressage prédéterminés lus dans les cellules de la liaison numérique d'émission et des cellules produites par les terminaux en réponse à des deuxièmes champs d'adressage prédéterminé lus dans les cellules de la liaison numérique d'émission, et une mémoire tampon dans laquelle les cellules d'intercommunication détectées sont écrites sous la commande du deuxième moyen pour détecter et sont lues sous la commande du premier moyen pour détecter afin de les introduire dans des emplacements de cellule vide dans la liaison numérique de réception.

Chaque champ d'adressage peut être un identificateur de voie virtuelle dans l'en-tête de cellule ATM, ou plus généralement au moins une partie du champ d'identificateurs de conduit et voie virtuels VPI/VCI dans l'en-tête d'une cellule ATM.

Lorsque chaque terminal peut être désigné par deux adresses distinctes par un terminal de réseau et un terminal de l'installation, le moyen pour aiguiller comprend un moyen pour marquer les cellules d'intercommunication détectées en modifiant l'état d'un champ prédéterminé dans l'en-tête des cellules d'intercommunication, et un moyen pour recalculer des champs de contrôle d'erreur dans les en-têtes des cellules d'intercommunication.

Si chaque terminal ne peut reconnaître au moins qu'une seule adresse (identificateur), voire plusieurs adresses prédéterminées, le moyen pour aiguiller comprend en outre un moyen pour traduire des premiers champs d'adressage des cellules d'intercommunication détectées en des deuxièmes champs d'adressage selon une table de connexion.

Le champ prédéterminé peut être au moins une partie d'un champ de contrôle de flux dans l'en-tête des cellules ATM.

Selon une réalisation préférée, chaque terminal est relié à la boucle qui le contient par un adaptateur comprenant un moyen de réception pour recevoir au moins les cellules de réseau diffusées dans la boucle, un moyen pour insérer des cellules produites par le terminal à la place d'emplacements de cellule vide entre les cellules reçues par le moyen de réception, et un moyen d'émission pour émettre les cellules reçues et les cellules produites par le terminal à travers la boucle vers le moyen de collecte.

Ledit moyen pour insérer pour chaque terminal peut comprendre un moyen pour détecter les cellules de réseau reçues afin d'interdire l'émission de toute cellule produite par le terminal pendant le transfert d'une cellule de réseau reçue entre le moyen de réception et le moyen d'émission, et un moyen pour détecter des emplacements vides de cellule entre les cellules reçues afin d'autoriser l'insertion de cellules produites par le terminal dans des emplacements vides de cellule détectés, tout en conservant des emplacements vides disponibles pour des cellules produites par les terminaux succédant audit terminal dans la boucle. Ainsi, lorsque le terminal est inclus en cascade avec d'autres terminaux dans une boucle locale numérique entre le moyen de diffusion et le moyen de collecte, le moyen pour détecter des emplacements vides de cellule peut compter les emplacements vides détectés modulo un nombre de terminaux dans la boucle entre ledit terminal et le moyen de collecte, y compris ledit terminal, afin de n'autoriser l'insertion d'une cellule produite par ledit terminal que dans l'un des emplacements vides de cellule en nombre égal audit nombre de terminaux.

De préférence, le moyen pour détecter n'autorise l'insertion d'une cellule produite par ledit terminal en fonction du comptage des emplacements vides détectés que lorsque la fréquence des emplacements vides de cellule est inférieure à un seuil prédéterminé.

L'adaptateur de terminal comprend de préférence un moyen de commutation qui autorise la réception au moins de cellules de réseau diffusées par le moyen de réception et l'émission de cellules par le moyen d'émission seulement lorsque le terminal est en fonctionnement, et réalise une liaison directe pour au moins des cellules de réseau diffusées lorsque le terminal est hors tension. Le moyen de commutation maintient ainsi la transmission des cellules dans la boucle même lorsqu'une partie des terminaux de la boucle sont hors tension.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme schématique d'une installation intérieure de client multi-terminaux basée sur le mode ATM selon l'invention ;
- la figure 2 montre le format connu d'une cellule ATM à l'interface client-réseau ;
- la figure 3 est un bloc-diagramme d'un diffuseur de cellules de réseau ATM inclus dans l'installation ;
- la figure 4 est un bloc-diagramme d'un adaptateur pour terminal inclus dans l'installation ;
- la figure 5 est un bloc-diagramme d'un collecteur de cellules de réseau ATM inclus dans l'installation ;
- la figure 6 est un algorithme de scrutation de mémoires tampons dans le collecteur ;
- la figure 7 est un bloc-diagramme d'un diffuseur de cellules de réseau ATM et de cellules d'intercommunication ATM selon une deuxième réalisation ; et
- la figure 8 est un bloc-diagramme d'un collecteur de cellules de réseau ATM et de cellules d'intercommunication ATM selon la deuxième réalisation.

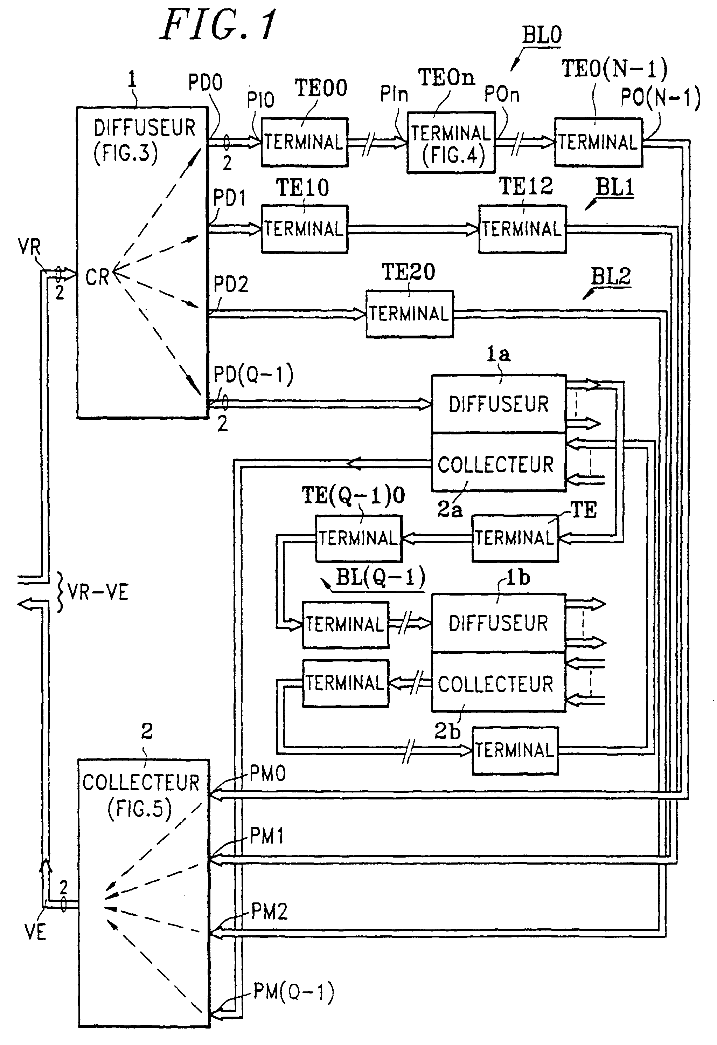

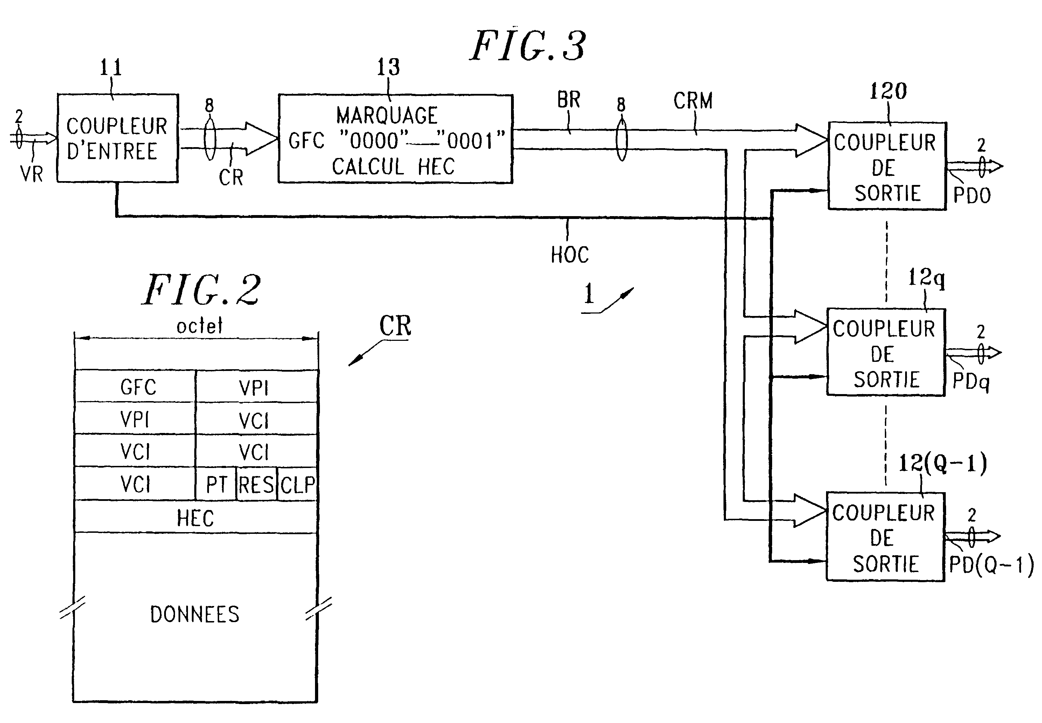

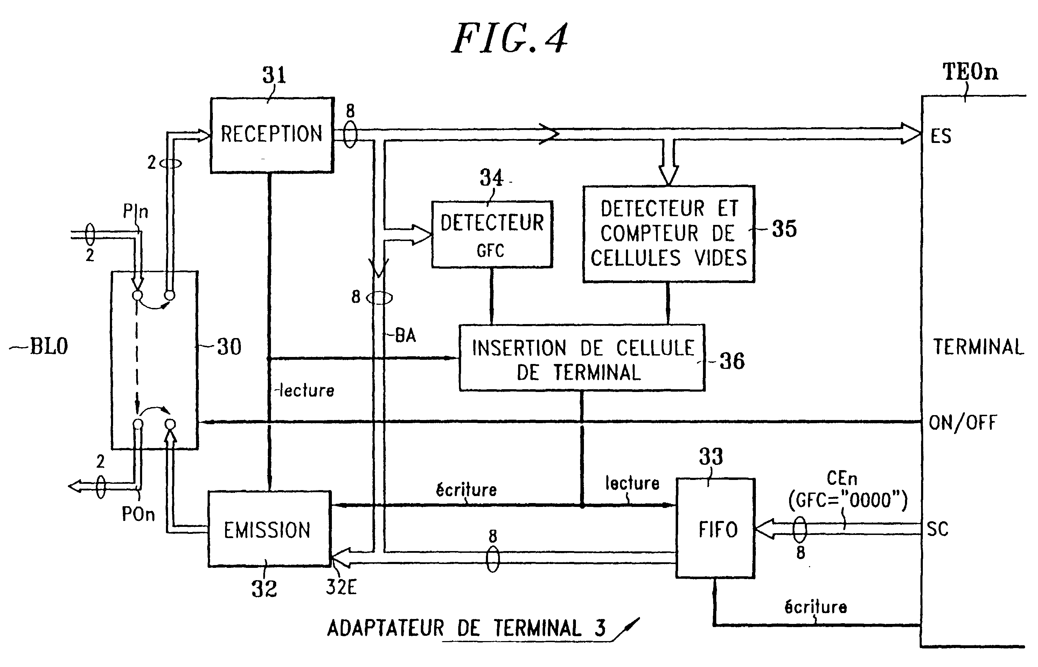

En référence à la figure 1, une installation de client multi-terminaux desservie par une ligne de télécommunication de client numérique duplex VR-VE rattachée à travers une terminaison numérique de réseau à un commutateur numérique ATM dans un réseau de télécommunication ATM comprend essentiellement un dispositif de diffusion et de collecte de cellules ATM, dit répliqueur-routeur 1-2, et au moins plusieurs terminaux TE répartis dans les locaux du client, tels que des pièces du domicile du client par exemple. Un terminal TE peut être un micro-ordinateur, un appareil de commande et/ou de surveillance domotique par exemple, un serveur local, un poste téléphonique numérique, un récepteur de télévision câblé, etc...

La ligne de télécommunication VE-VR est par exemple composée de deux paires symétriques de fils métalliques VE et VR et est reliée à une terminaison numérique de reseau (TNR) par exemple de type RNIS ou ADSL. La première paire de la ligne constitue une voie physique de réception VR pour convoyer un flux de cellules de réseau ATM CR transmises depuis le commutateur ATM vers un diffuseur de cellules 1 inclus dans le répliqueur-routeur. Le diffuseur diffuse suivant le sens descendant les cellules reçues et traite à travers Q ports de sortie PD0 à PD (Q-1) desservant les terminaux TE directement ou indirectement. La deuxième paire de la ligne constitue une voie physique d'émission VE pour convoyer un flux de cellules ATM transmises depuis les terminaux vers Q ports d'entrée PMO à PM (Q-1) d'un collecteur de cellules 2 inclus dans le répliqueur-routeur. Le collecteur collecte les cellules transmises par les terminaux suivant le sens montant.

Les paires de ports PDO-PMO à PD(Q-1)-PM(Q-1) forment des extrémités de boucles locales de transmission numérique BLO à BL(Q-1) chacune desservant au moins un terminal et constituée par une paire de fils métalliques selon l'exemple illustré. Toutefois, en variante, tout ou partie d'une boucle locale est constituée par une fibre optique plastique, multimode ou monomode avec des convertisseurs électro-optiques et opto-électriques adéquats dans les coupleurs aux extrémités de la boucle et dans les adaptateurs associés aux terminaux inclus dans la boucle ; cette variante affranchie la boucle locale de perturbations électriques émanant de fils électriques à courant fort dans l'installation électrique du client qui cheminent au voisinage de la boucle locale de transmission. Selon encore une autre variante, tout ou partie d'une boucle locale est constituée par une voie radioélectrique.

A titre d'exemple auquel référence sera faite dans la suite de la description, le débit dans la ligne de télécommunication VR-VE et dans les liaisons de boucle entre terminaux TE est de 32 Mbit/s et correspond à un débit prédéterminé de (4/5) 32 = 25,6 Mbit/s suite à un transcodage binaire 5B-4B dans le diffuseur 1 et un transcodage binaire 4B-5B dans le collecteur 2. Selon d'autres variantes, le débit est nettement plus élevé, par exemple égal à 155,52 Mbit/s dans le diffuseur et le collecteur, ainsi que dans des adaptateurs de terminaux décrits plus loin.

Selon la réalisation illustrée à la figure 1, Q=4 boucles locales à paire de fils BLO à BL(Q-1)=BL3 sont reliées respectivement par les couples de ports PDO-PMO à PD(Q-1)-PM(Q-1)=PD3-PM3 et comprennent volontairement plusieurs exemples d'architecture de boucle locale.

La première boucle locale BLO comprend N terminaux numériques TE00 à TE0(N-1) qui sont reliés en cascade. Comme on le verra dans la suite, chaque terminal est équipé d'un adaptateur 3 lié à la boucle. Le premier terminal TE00 suivant le sens descendant a un port d'entrée d'adaptateur PIO relié au port de sortie de diffuseur PD0, et le dernier terminal TE0 (N-1) a un port de sortie d'adaptateur PO (N-1) relié au port d'entrée de collecteur PMO. Un terminal TEOn dans la boucle BLO, avec 0<n<N-1, a un port d'entrée d'adaptateur PIn relié au port de sortie d'adaptateur relatif au terminal précédent TE0(n-1) à travers une paire de fils de transmission et a un port de sortie d'adaptateur POn relié au port d'entrée d'adaptateur relatif au terminal suivant TE0 (n+1) à travers une paire de fils de transmission.

Selon d'autres exemples de boucle locale, la boucle BL1 comprend quelques terminaux TE11 et TE12, et la boucle BL2 ne comprend qu'un seul terminal TE20. L'installation ATM présente une architecture en étoile.

La mise en cascade de répliqueurs-routeurs de l'invention est également possible, comme avec les terminaux. Par exemple, la dernière boucle locale BL (Q-1) comprend un deuxième répliqueur-routeur 1a-2a dont le port d'entrée du diffuseur 1a et le port de sortie de collecteur 2a sont reliés respectivement au port de sortie PD (Q-1) du diffuseur 1 et au port d'entrée PM (Q-1) du collecteur 2 à travers un terminal TE (Q-1) 0. Par exemple, le deuxième répliqueur-routeur 1a-2a dessert plusieurs boucles locales dont l'une illustrée à la figure 1 comprend encore un troisième répliqueur-routeur de l'invention 1b-2b en cascade avec plusieurs terminaux, les autres boucles desservies par les répliqueurs-routeurs 1a-2a et 1b-2b pouvant comprendre chacune au moins un terminal TE et/ou un répliqueur-routeur.

Certains champs des cellules ATM sont traités dans le répliqueur-routeur de l'invention. Le format d'une cellule ATM est rappelé ci-après en référence à la figure 2, essentiellement en correspondance avec les fonctions nécessaires aux répliqueurs-routeurs et boucles locales de l'invention.

Une cellule ATM comprend un en-tête à 5 octets et un champ de données utiles de taille constante de 48 octets.

Le premier champ de l'en-tête est le champ de contrôle de flux générique GFC (Generic Flow Control) à 4 bits. La valeur "0000" est incluse par défaut dans toutes les cellules de réseau CR délivrées par le commutateur de rattachement ATM à travers la voie de réception VR de la ligne de télécommunication.

Les six demi-octets suivants dans l'en-tête de cellule sont occupés par un champ d'adressage VPI/VCI comprenant un identificateur de conduit virtuel à 8 bits VPI (Virtual Path Identifier) et un identificateur de voie virtuelle à 2 octets VCI (Virtual Channel Identifier). Au niveau d'une installation de client, un conduit virtuel est constitué par la ligne de télécommunication de client VR-VE si bien que le commutateur de rattachement ATM est un brasseur de conduits virtuels. Le champ VCI contient l'adresse d'un terminal destinataire TE inclus dans l'installation et assure une communication point-à-point de bout en bout entre deux terminaux éloignés.

Selon d'autres variantes, les identificateurs de l'installation et d'un terminal de l'installation, ou bien seulement l'identificateur d'un terminal indépendamment de l'installation où il est inclus, sont répartis sur une partie de l'ensemble du champ d'adressage VPI/VCI en fonction de plans d'adressage établis par des opérateurs et constructeurs d'installation.

Le deuxième demi-octet du quatrième octet de l'en-tête comprend trois champs PT, RES, et CLP n'intervenant pas dans l'invention.

Le dernier et cinquième octet de l'en-tête d'une cellule ATM constitue un champ de contrôle d'erreur sur l'en-tête HEC (Header Error Control). Avant l'émission de la cellule, le contenu du champ HEC est calculé selon un algorithme prédéterminé en fonction des quatre premiers octets de la cellule et, après réception de la cellule, sert à corriger des erreurs simples dans l'en-tête de la cellule reçue et à rejeter la cellule si plusieurs erreurs sont détectées dans la cellule ou des erreurs sont détectées dans un nombre prédéterminé de cellules consécutives de la même voie logique VPI/VCI. Le champ HEC sert également de délimiteur de cellule lorsqu'il est correct.

Le diffuseur 1 d'un répliqueur-routeur de l'invention est un répliqueur qui diffuse les cellules ATM reçues par la voie de réception VR de la ligne de télécommunication vers les boucles locales BLO à BL (Q-1), c'est-à-dire qui recopie chaque cellule de réseau reçue CR dans chaque boucle locale suivant le sens descendant.

Comme montré à la figure 3, le diffuseur 1 comprend un coupleur d'entrée 110 et Q coupleurs de sortie 120 à 12(Q-1).

Le coupleur d'entrée 11 transcode, désembrouille, retire la configuration en trame des cellules et régénère le flux entrant à 32 Mbit/s en un flux interne à 25,6 Mbit/s au moyen d'un transcodeur 5B-4B, en éliminant des octets prédéterminés servant à la détection de trames de cellules et au recadrage des cellules ATM reçues. Le coupleur 11 récupère un signal d'horloge à 32 MHz et, après division de fréquence, applique un signal d'horloge d'octet de cellule HOC à 25,6/8=3,2 MHz à tous les coupleurs de sortie 120 à 12(Q-1). Le signal HOC est synchrone avec des octets de cellules ATM reçues à 53 octets transmises par le coupleur d'entrée 11 dans un bus de liaison numérique de réception interne BR à 8 fils diffusant les octets des cellules reçues vers des ports d'entrée des coupleurs de sortie.

Les coupleurs de sortie 120 à 12 (Q-1) convertissent en synchronisme avec le signal d'horloge HOC, chaque octet parallèle de cellule en huit bits série, trament les cellules, embrouillent et transcodent selon le code 4B-5B le flux des cellules diffusées dans les boucles locales BLO à BL (Q-1) à travers les ports de sortie PD0 à PD (Q-1) selon le sens descendant.

La diffusion des cellules proprement dite ne nécessite a priori aucun changement de l'en-tête de chaque cellule. En particulier, le champ de cellule de réseau GFC="0000" et les champs d'adressage VPI/VCI peuvent être maintenus au cours de la traversée du diffuseur 1 par les cellules de réseau.

En référence à un terminal quelconque TE0n dans une boucle locale, telle que la boucle BLO, un adaptateur de terminal 3 montré à la figure 4 est inclus devant chaque terminal désigné par TEOn.

Un circuit de réception 31 de l'adaptateur transcode en code 5B-4B, désembrouille, retire la configuration en trames des cellules et regénère le flux entrant de boucle à 32 Mbit/s en un flux interne à 25,6 Mbit/s, comme le coupleur 11 du diffuseur. Le circuit 31 convertit les octets sous forme parallèle et dirige octet par octet toutes les cellules ATM qui sont transmises par le coupleur d'entrée respectif 120 dans le diffuseur 1 suivant le sens descendant, et le cas échéant les cellules produites par au moins un terminal précédant TE0 (n-1), vers un port d'entrée de cellule ES du terminal proprement dit TEOn qui prélève les cellules qui lui sont destinées en fonction de l'identificateur de voie virtuelle VCI, et vers un port d'entrée 32E d'un circuit d'émission 32 à travers un bus BA à 8 conducteurs interne à l'adaptateur. Les cellules reçues dans le circuit 31 et des cellules ATM CEn produites par le terminal proprement dit TEOn à travers un port de sortie de cellule SC et une mémoire tampon de cellules montantes FIFO 33 sont mélangées dans le bus BA et traversent le circuit d'émission 32 pour être transmises vers le port d'entrée de collecteur PMO le cas échéant à travers au moins un terminal TE0 (n+1). Le circuit d'émission 32, comme chaque coupleur de sortie 12q du diffuseur 1, met en série les octets de cellules, configure en trames les cellules transmises par le circuit 31 et le terminal TE0n, les embrouille et les transcode en code 4B-5B.

En pratique, les ports de boucle PIn et POn de l'adaptateur 3 sont reliés respectivement à l'entrée du circuit de réception 31 et à la sortie du circuit d'émission 32 à travers un commutateur à quatre ports 30 lorsque le terminal TEOn est en fonctionnement, en réponse à un signal de commande à un état ON délivré par le terminal TEOn en fonctionnement. Si le terminal TEOn est hors tension, le signal de commande est à un état OFF, et le commutateur 30 est à une position de repos pour relier directement les ports PIn et POn pour les cellules de réseau diffusées et les cellules produites par les terminaux précédents TE00 à TE0(n-1), sans que les cellules dans la boucle BLO traversent les circuits 31 et 32 internes à l'adaptateur.

Dans l'adaptateur 3, des moyens sont prévus pour insérer les cellules CEn produites par le terminal à la place d'emplacements vides de cellules entre cellules reçues par le circuit 31, tout en laissant des cellules vides disponibles pour les terminaux suivants TE0 (n+1) à TEO (N-1) dans la boucle BLO. Les moyens précités comprennent un détecteur de champ GFC 34, un détecteur/compteur de cellules vide 35 et un circuit d'insertion de cellule de terminal 36. Le détecteur 34 détecte les cellules "pleines" de données ayant un champ de contrôle de flux GFC "0000" (ou "0001" comme on le verra dans la suite) transmises par le réseau ATM via, le port de diffuseur PD0 et le cas échéant des cellules avec le champ GFC = "0000" produites par des terminaux précédents TE0 à TE (n-1), afin que le circuit 36 interdise toute lecture de cellule de terminal CEn déjà écrite par le terminal TE0n dans la mémoire FIFO 33 pendant la retransmission de chaque cellule reçue depuis le circuit de réception 31 vers le circuit d'émission 32. Le détecteur/compteur 35 détecte les cellules vides, c'est-à-dire les emplacements vides de cellule, entre les cellules "pleines" et compte les cellules vides détectées modulo (N-n+1) afin que le circuit 36 autorise la lecture d'une cellule de terminal CEn dans la mémoire FIFO 33 et l'insertion de cette cellule lue toutes les (N-n+1) cellules vides détectées dans le flux de cellules descendantes transmises dans le bus BA par le circuit 31. Dans les (N-n+1) cellules vides, N-n cellules vides dans le flux de cellules sortant du circuit d'émission 32 sont disponibles pour être remplacées par des cellules produites par les terminaux suivants TE0(n+1) à TEON.

De préférence, le détecteur/compteur de cellules vides 35 ne commande le circuit d'insertion de cellule 36 lorsque la fréquence des cellules vides est inférieure à un seuil prédéterminé, c'est-à-dire lorsque la ressource de cellules vides au port d'entrée d'adaptateur PIn se raréfie afin d'éviter une inutilisation des cellules vides.

Selon une variante, lorsque la boucle ne comprend qu'un terminal, comme la boucle BL2 avec le terminal TE20, les circuits 33 à 36 peuvent être supprimés ainsi que le bus de bouclage BA à 8 conducteurs entre les circuits de réception et d'émission 31 et 32.

Le collecteur 2 du répliqueur-routeur 1-2 est montré en détail à la figure 5 et comprend Q coupleurs d'entrée 210 à 21 (Q-1) reliés aux ports d'entrée de collecteur PMO à PM (Q-1), Q mémoires tampons FIFO 220 à 22 (Q-1) reliées aux coupleurs d'entrée par des bus pour octet à bits parallèles, un coupleur de sortie 23 relié aux sorties des mémoires FIFO par un bus de liaison numérique d'émission BE pour octet à bits parallèles, et un circuit de commande 24. Les coupleurs d'entrée 210 à 21 (Q-1) accomplissent un transcodage 5B-4B, un désembrouillage, un retrait de configuration en trame de cellules et une régénération du flux montant de cellules transmis par les boucles. Ils reçoivent en asynchronisme les cellules CR provenant du réseau ATM et diffusées par le diffuseur 1 et les cellules CE produites par les terminaux qui sont transmises à travers les voies montantes des boucles locales BLO à BL (Q-1), signalent le début des cellules reçues CR et CE au circuit de commande 24 et régénèrent et synchronisent les cellules reçues avec un signal d'horloge d'octet HOC à 3,2 MHz fourni par le coupleur de sortie 23, ou bien par le coupleur d'entrée 11 du diffuseur 1. Les cellules CR et CE sont ainsi écrites octet par octet et en synchronisme d'horloge d'octet dans les mémoires 220 à 22 (Q-1) par le circuit de commande 24.

Les cellules ATM collectées par les mémoires FIFO 220 à 22 (Q-1) sont routées de manière équitable dans le bus de liaison numérique d'émission commun BE vers le coupleur de sortie 23 sous la commande du circuit 24 afin d'éviter des chevauchements de cellules puisque les flux entrant dans les mémoires FIFO et le flux sortant de celles-ci dans le bus BR sont à 3,2 Moctet/s et afin de vider rapidement les mémoires FIFO chacune à leur tour et cellule par cellule.

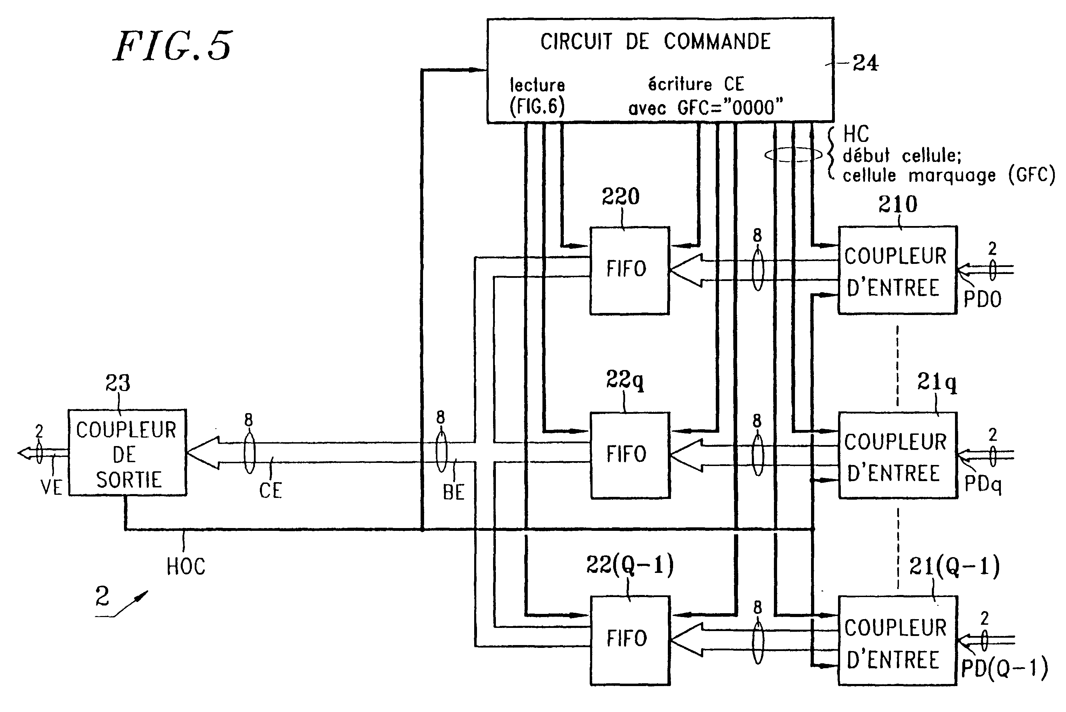

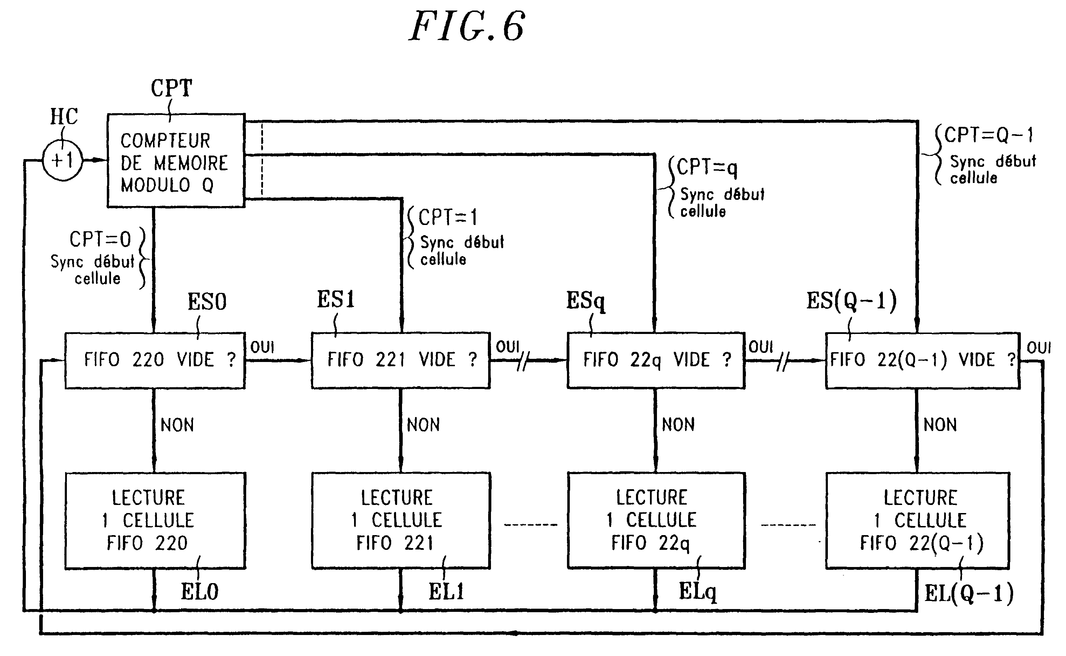

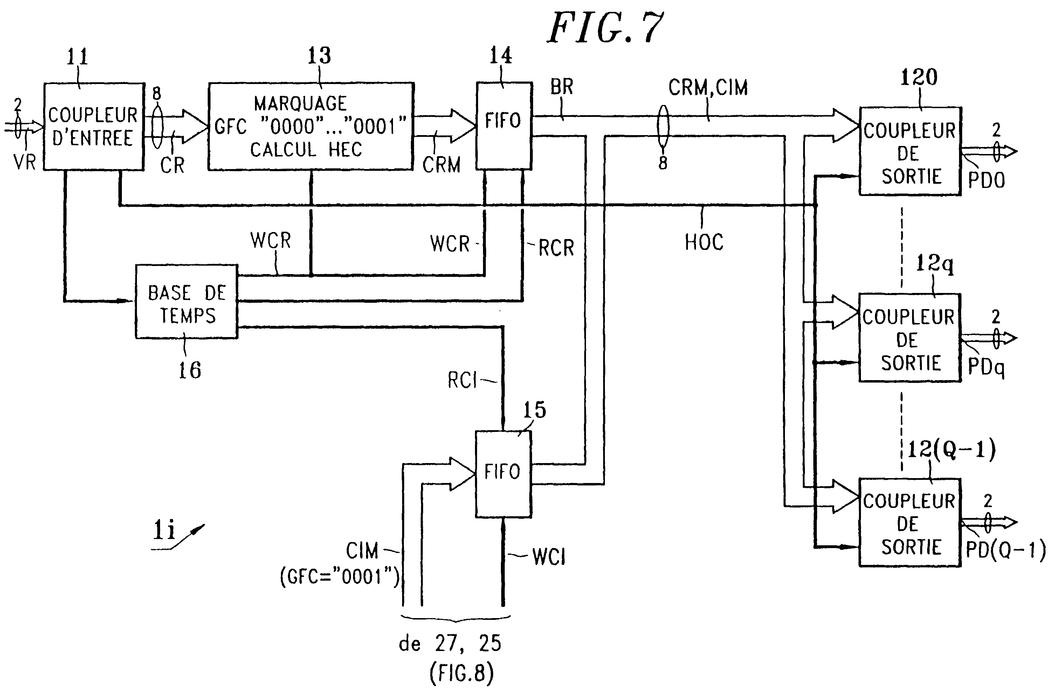

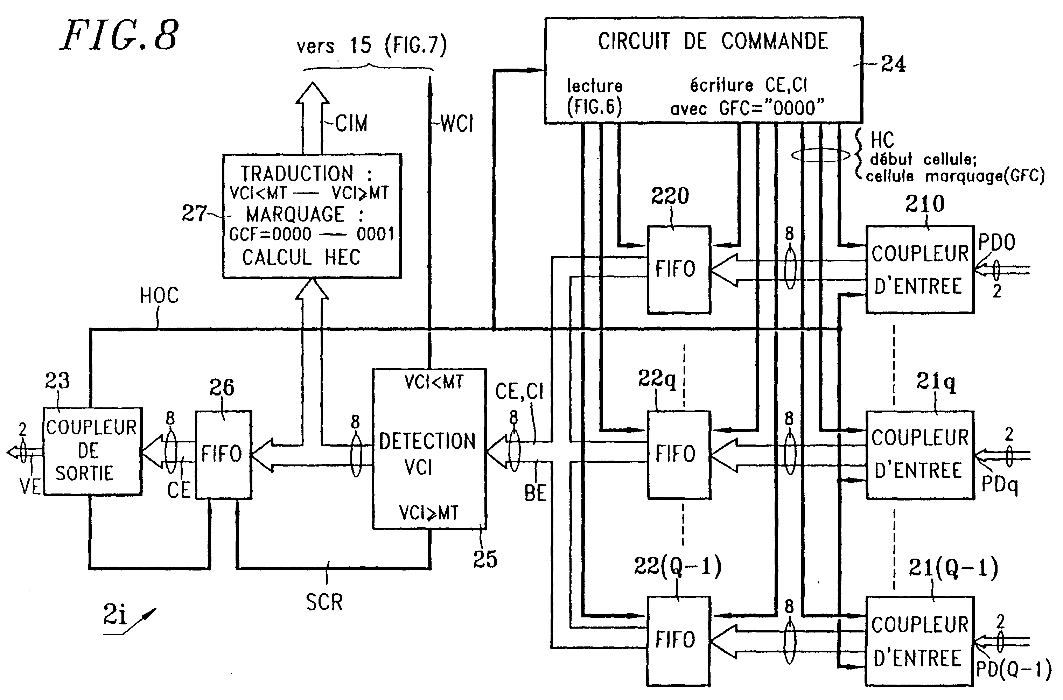

La lecture des mémoires FIFO 220 à 22 (Q-1) est effectuée selon l'algorithme montré à la figure 6. Un compteur de mémoire modulo Q CPT est incrémenté d'une unité en réponse à un signal d'horloge de début de cellule HC à la fréquence de cellule à 53 octets synchrone avec le signal HOC et appliqué aux coupleurs d'entrée. A chaque impulsion du signal de début de cellule HC, le contenu de l'une 22q des mémoires FIFO est scrutée à une étape de scrutation ESq, avec 0≤q≤Q-1. Si la mémoire 22q contient au moins une cellule, le circuit 24 commande la lecture de la cellule qui a été la première écrite dans cette mémoire et la transmission de celle-ci dans le bus BE octet par octet à une étape de lecture ELq ; puis le compteur CPT est incrémenté d'une unité pour lire la mémoire suivante 22 (q+1) à une étape de scrutation ES (q+1), et ainsi de suite. Si la mémoire 22q est vide de cellule à l'étape ESq, l'algorithme scrute la mémoire suivante 22 (q+1) sans attendre l'impulsion suivante du signal d'horloge de début de cellule HC et ainsi de suite jusqu'à travers une mémoire contenant une cellule à lire, ou jusqu'à avoir balayé toutes les mémoires avant que le compteur CPT soit incrémenté; cet algorithme évite d'allouer inutilement des emplacements vides de cellule dans le bus d'émission BE à une boucle locale qui n'a pas de cellule de terminal à émettre.

En revenant à la figure 5, le coupleur de sortie 23 effectue des opérations réciproques du coupleur d'entrée du diffuseur 11. Il convertit les octets dans le bus BE en bits en série, configure les trames de cellule ATM, embrouille et transcode en code 4B-5B les cellules lues dans les mémoires FIFO 220 à 22(Q-1), collectées et multiplexées dans le bus interne BE au débit prédéterminé de 25,6 Mbit/s pour les retransmettre dans la voie d'émission VE de la ligne de télécommunication au débit de 32 Mbit/s.

Selon la réalisation décrite ci-dessus, des cellules de réseau CR reçues de la voie de réception de ligne VR dans le coupleur d'entrée 11 du diffuseur 1 et parcourant les boucles locales BLO à BL(Q-1) sont retransmises dans le réseau ATM par les coupleurs d'entrée 210 à 21 (Q-1) du collecteur 2 vers la voie d'émission de ligne VE. Afin d'éviter cette retransmission de cellules reçues par l'installation, le champ de contrôle de flux GFC des cellules de réseau CR reçues initialement à l'état "0000" par le diffuseur 1 est remplacé par un état prédéterminé, par exemple "0001", dans un circuit de marquage de cellule de réseau et de calcul de champ de contrôle d'erreur 13 introduit dans le bus BR entre le port de sortie du coupleur 11 et les ports d'entrée des coupleurs 120 à 12(Q-1), comme montré à la figure 3. Puisque l'en-tête des cellules de réseau est modifié, le champ de contrôle d'erreur HEC de chaque cellule de réseau marquée CRM est recalculé dans le circuit 13. En revenant à la figure 5, chacun des coupleurs d'entrée de collecteur 210 à 21 (Q-1) détecte les cellules de réseau marquées CRM avec un champ GFC="0001" retransmises par les boucles et le signale au circuit de commande 24. Dans les mémoires FIFO 220 à 22 (Q-1), le circuit 24 interdit l'écriture des cellules de réseau marquées CRM par un champ GF="0001" et n'autorise que l'écriture des cellules CE avec un champ GF="0000" produites par les terminaux dans les boucles locales BLO à BL (Q-1).

En se référant maintenant aux figures 7 et 8, le répliqueur-routeur 1-2 est remplacé par un répliqueur-routeur 1i-2i qui réinjecte des cellules d'intercommunication CI produites par les sorties des terminaux des boucles, telles que le port de sortie SC du terminal TE0a (figure 4), vers d'autres terminaux des boucles pour des intercommunications point-à-point dans l'installation de client. Les cellules d'intercommunication produites CI ont un champ de contrôle de flux GFC="0000" et ne sont pas marquées préalablement comme les cellules de réseau CRM destinées aux terminaux. Toutefois, les cellules d'intercommunication CI se distinguent des cellules CE produites par les terminaux afin que dans le collecteur 2i, les cellules d'intercommunication CI soient aiguillées vers le diffuseur 1i et les cellules CE produites par les terminaux soient dirigées vers la voie d'émission de ligne VE. Cette distinction réside dans l'identificateur de voie virtuelle VCI du champ d'adressage VPI/VCI qui est, selon la réalisation décrite, supérieur ou égal à un nombre prédéterminé MT=32 pour des cellules de réseau CR reçues par la voie de réception VR ou des cellules CE produites par les terminaux et qui, selon l'invention, est strictement inférieur à MT=32 pour des cellules d'intercommunication CI. Le paramètre MT détermine le nombre maximum de terminaux dans l'installation pouvant intervenir dans des intercommunications.

Selon une première réalisation d'intercommunication, il est supposé que chaque terminal TE de l'installation ne reconnaît qu'un seul identificateur VCI qui lui est attribué normalement par tout terminal expéditeur de cellules destinées au terminal de l'installation.

Dans le diffuseur 1i montré à la figure 7 et le collecteur 2i montré à la figure 8, on retrouve les coupleurs 11 et 120 à 12(Q-1) et le circuit de marquage de cellules de réseau et de calcul de champ de contrôle d'erreur 13, et les coupleurs 210 à 21(Q-1) et 23, les mémoires tampons FIFO 220 à 22 (Q-1) et le circuit de commande 24 qui élimine les cellules marquées ayant un champ GFC="0001" et ayant parcouru les boucles afin de ne pas les écrire dans les mémoires FIFO et qui commande dans les mémoires FIFO l'écriture et la lecture des cellules seulement émises par les terminaux de l'installation selon l'algorithme de la figure 6.

Le diffuseur 1i montré à la figure 7 comprend en outre une mémoire FIFO de cellules marquées 14, une mémoire FIFO de cellules d'intercommunication 15 et une base de temps de réception 16 qui est en partie incluse dans le coupleur d'entrée 11 dans la figure 3. La mémoire de cellules marquées 14 est interconnectée dans le bus de réception à 8 conducteurs BR à 3,2 MHz interne au diffuseur entre le circuit 13 et les ports d'entrée des coupleurs de sortie 120 à 12 (Q-1). Un port à 8 sorties de la mémoire de cellules d'intercommunication 15 rejoint le bus de réception BR afin d'introduire dans des emplacements de cellule vide entre les cellules de réseau reçues, c'est-à-dire entre les cellules marquées CRM, des cellules d'intercommunication à diffuser dans les boucles locales BLO à BL (Q-1). La base de temps 16 reçoit un signal de début de cellule de réseau CR établi par le coupleur d'entrée 11 afin de produire systématiquement un signal de commande d'écriture WCR pour écrire dans la mémoire 14 les cellules de réseau marquées CRM fournies par le circuit 13 et un signal de commande de lecteur RCR pour lire les cellules de réseau dans la mémoire 14 au rythme de la diffusion des cellules dans l'installation. Le coupleur d'entrée 11 signale également des emplacements de cellule vide entre les cellules de réseau CR reçues dans la voie de réception VR à la base de temps 16 qui élabore un signal de commande de lecture RCI pour lire des cellules d'intercommunication dans la mémoire 15 et les introduire entre les cellules de réseau marquées CRM dans le bus de réception BR.

Le collecteur 2i montré à la figure 8 comprend en outre un circuit de détection d'identificateur de voie virtuelle 25, une mémoire FIFO de cellules de réseau non marquées 26 et un circuit de traduction d'identificateur de voie virtuelle, de marquage de cellule et de calcul de champ de contrôle d'erreur 27. Le circuit de détection 25 et la mémoire 26 sont connectés en cascade dans le bus d'émission BE à 8 conducteurs interne au collecteur, entre les ports à 8 sorties des mémoires FIFO 220 à 22 (Q-1) et le port à 8 entrées du coupleur de sortie 23. Le circuit 27 est connecté entre le port à 8 sorties du circuit de détection 25 et le port à 8 entrées de la mémoire 15 dans le diffuseur 1i.

Le circuit 25 distingue dans les cellules produites par les terminaux dans l'installation de télécommunication de client, les cellules de réseau CE destinées à des terminaux distants et devant être transmises par la voie d'émission VE de la ligne de télécommunication et les cellules d'intercommunication CI destinées à des terminaux de l'installation et devant être diffusées par le diffuseur 1i. En réponse à un identificateur de voie virtuelle VCI supérieur ou égal au nombre prédéterminé MT=32 détecté dans une cellule lue dans l'une des mémoires 220 à 22 (Q-1), le circuit de détection 25 applique un signal de commande d'écriture SCR à la mémoire FIFO 26 afin que la cellule lue soit écrite, en tant que cellule de réseau non marquée CE avec un champ GFC="0000", dans la mémoire 26, puis soit lue sous la commande du coupleur de sortie 23 pour la transmettre dans la voie d'émission de ligne VE.

Lorsque l'identificateur détecté VCI est tel que VCI<MT, le circuit de détection 25 applique un signal de commande d'écriture WCI à la mémoire FIFO 15 (figure 7) afin que la cellule lue dans l'une des mémoires 220 à 22(Q-1) soit traitée en tant que cellule d'intercommunication CI dans le circuit 27, puis écrite dans la mémoire 15 en attente d'être insérée entre des cellules de réseau marquées CRM dans le bus de réception BR du diffuseur 1i. Dans le circuit 27, l'identificateur VCI<MT dans la cellule d'intercommunication CI à traiter est traduit en un identificateur de voie virtuelle VCI supérieur ou égal à MT et correspondant au terminal de l'installation destinataire de la cellule lue, grâce à une table de connexion de voie virtuelle programmable entre les identificateurs VPI<MT et des identificateurs VPI ≥ MT=32. Le champ de contrôle de flux GFC="0000" de la cellule CI est traduit en "0001" dans le circuit 27. La programmation de la table de connexion peut être effectuée par un terminal prédéterminé de l'installation adressant au circuit 27 des messages de cellules avec l'adresse de routage du circuit 27. Les cellules d'intercommunication CI deviennent ainsi des cellules marquées CIM, comme les cellules de réseau marquées CRM dans le diffuseur 1i, afin qu'elles soient éliminées par le circuit 24 après avoir traversé toutes les boucles de l'installation. L'identificateur VPI et le champ de contrôle GFC traduits modifiant l'en-tête de la cellule d'intercommunication CI, le champ de contrôle d'erreur HEC de celle-ci est recalculé dans le circuit 27. La cellule d'intercommunication marquée CIM écrite dans la mémoire 15 contient ainsi un identificateur VCI et des champs GFC et HEC différents de ceux dans la cellule d'intercommunication CI détectée par le circuit 25.

Selon une deuxième réalisation d'intercommunication, chaque terminal TE de l'installation est capable de reconnaître deux identificateurs différents VCI ou, comme déjà dit, susceptibles d'être inclus chacun dans le champ d'adressage VPI/VCI d'une cellule. Le premier identificateur est celui attribué normalement par un terminal éloigné expéditeur de cellules de réseau à travers la voie de réception VR et est supérieur ou égal à MT=32. Selon l'invention, le deuxième identificateur est celui attribué par un terminal de l'installation souhaitant transmettre des cellules d'intercommunication ATM à un autre terminal de l'installation et est strictement inférieur à MT.

Pour cette deuxième réalisation, la fonction de traduction d'identificateur dans le circuit de traduction, de marquage et de calcul 27 est supprimée, et les cellules d'intercommunication CI conservent leurs identificateurs lors du transfert du bus d'émission BE du collecteur 2i au bus de réception BR dans le diffuseur 1i à travers les circuits 25 et 27 et la mémoire 15.

## Revendications

1. Installation terminale reliée à une ligne de télécommunication (VR-VE) convoyant des cellules de réseau en mode ATM et comprenant des terminaux, **caractérisée en ce qu'**elle comprend un moyen de diffusion (1) pour diffuser toutes les cellules de réseau (CR) reçues par une voie de réception (VR) de la ligne de télécommunication vers les terminaux (TE) et un moyen de collecte (2) pour collecter des cellules (CE) produites par les terminaux (TE) et les transmettre dans une voie d'émission (VE) de la ligne de télécommunication.

2. Installation terminale conforme à la revendication 1, dans laquelle
le moyen de diffusion (1) comprend un moyen d'entrée (11) pour régénérer des cellules de réseau (CR) reçues par la voie de réception (VR) dans une liaison numérique de réception (BR), et plusieurs moyens de sortie (120 à 12 (Q-1)) reliés à la liaison de réception pour retransmettre en synchronisme toutes les cellules régénérées respectivement dans plusieurs boucles locales (BLO à BL (Q-1)) comprenant au moins un terminal, et
le moyen de collecte (2) comprend plusieurs moyens d'entrée (220 à 22 (Q-1)) reliés respectivement aux boucles locales pour synchroniser et régénérer les cellules (CE) produites par les terminaux respectifs (TE) dans les boucles, plusieurs mémoires tampons (220 à 22 (Q-1)) pour transmettre cycliquement cellule par cellule les cellules régénérées dans une liaison numérique d'émission (BE) en ne lisant que les mémoires tampons contenant au moins une cellule par cycle, et un moyen de sortie (23) pour transmettre les cellules de la liaison numérique d'émission dans la voie d'émission (VE).

3. Installation terminale conforme à la revendication 1 ou 2, dans laquelle le moyen de diffusion (1) comprend un moyen (13) pour marquer les cellules de réseau (CR) provenant de la voie de réception (VR), et le moyen de collecte (2) comprend un moyen (24) pour supprimer les cellules de réseau marquées (CRM) diffusées vers les terminaux afin de ne pas les retransmettre dans la voie d'émission (VE).

4. Installation terminale conforme aux revendications 2 et 3, dans laquelle le moyen pour marquer (13) est interconnecté entre le moyen d'entrée (11) et lesdits plusieurs moyens de sortie (120 à 12 (Q-1)) dans la liaison numérique de réception (BR), et modifie l'état d'un champ prédéterminé (GFC) dans l'en-tête des cellules de réseau (CR), puis recalcule un champ de contrôle d'erreur (HEC) de l'en-tête, et le moyen pour supprimer (24) interdit l'écriture des cellules de réseau marquées (CRM) dans les mémoires tampons (220 à 22 (Q-1)) et n'autorise l'écriture que des cellules non marquées (CE) produites par les terminaux afin qu'elles soient transmises dans la liaison numérique d'émission (BE).

5. Installation terminale conforme aux revendications 1 à 4, comprenant un moyen (25, 15) pour aiguiller des cellules d'intercommunication ATM (CI) produites par des terminaux, depuis le moyen de collecte (1i) vers le moyen de diffusion (2i) afin de les diffuser avec les cellules de réseau reçues (CR) vers les terminaux.

6. Installation terminale conforme aux revendications 2 et 5, dans laquelle le moyen pour aiguiller comprend un premier moyen (11, 16) pour détecter des emplacements vides de cellule dans la liaison numérique de réception (BR), un deuxième moyen (25) pour détecter des cellules d'intercommunication (CI) en réponse à des premiers champs d'adressage prédéterminés (VCI<MT) lus dans les cellules de la liaison numérique d'émission (BE) et des cellules (CE) produites par les terminaux en réponse à des deuxièmes champs d'adressage prédéterminé (VCI ≥ MT) lus dans les cellules de la liaison numérique d'émission (BE), et une mémoire tampon (15) dans laquelle les cellules d'intercommunication détectées (CIM) sont écrites sous la commande du deuxième moyen pour détecter (25) et sont lues sous la commande du premier moyen pour détecter (11, 16) afin de les introduire dans des emplacements de cellule vide dans la liaison numérique de réception (BR).

7. Installation terminale conforme à la revendication 6, dans laquelle chaque champ d'adressage est au moins une partie d'un champ d'identificateurs de conduit et voie virtuels (VPI/VCI) dans l'en-tête d'une cellule ATM.

8. Installation terminale conforme à la revendication 6 ou 7, dans laquelle le moyen pour aiguiller comprend un moyen (27) pour marquer les cellules d'intercommunication détectées (CI) en modifiant l'état d'un champ prédéterminé (GFC) dans l'en-tête des cellules d'intercommunication, et un moyen (27) pour recalculer des champs de contrôle d'erreur (HEC) dans les en-têtes des cellules d'intercommunication.

9. Installation terminale conforme à la revendication 8, dans laquelle le moyen pour aiguiller comprend un moyen (27) pour traduire des premiers champs d'adressage (VCI<MT) des cellules d'intercommunication détectées (CI) en des deuxièmes champs d'adressage (VCI ≥ MT) selon une table de connexion.

10. Installation terminale conforme à l'une quelconque des revendications 4, 8 ou 9, dans laquelle le champ prédéterminé est au moins une partie d'un champ de contrôle de flux (GFC).

11. Installation terminale conforme à l'une quelconque des revendications 1 à 10, dans laquelle le moyen de diffusion (1) et le moyen de collecte (2) sont reliés par des boucles locales numériques dans lesquelles sont diffusées toutes les cellules de réseau reçues (CR), au moins l'une des boucles comprenant un terminal (TE20), ou plusieurs terminaux (TE00 à TE0-N-1)) en cascade, et/ou au moins un autre ensemble de moyen de diffusion et de moyen de collecte (1a-2a, 1b-2b).

12. Installation terminale conforme à l'une quelconque des revendications 1 à 11, dans laquelle chaque terminal (TE0n) est relié à un moyen de réception (31) pour recevoir au moins les cellules de réseau diffusées (CR), un moyen (34, 35, 36) pour insérer des cellules (CEn) produites par le terminal (TE0n) à la place d'emplacements de cellule vide entre les cellules reçues, et un moyen d'émission (32, 33) pour émettre les cellules reçues et les cellules produites par le terminal vers le moyen de collecte (2).

13. Installation terminale conforme à la revendication 12, dans laquelle le moyen pour insérer pour chaque terminal (TE0n) comprend un moyen (34, 36) pour détecter les cellules reçues afin d'interdire l'émission de toute cellule (CEn) produite par le terminal pendant le transfert d'une cellule de réseau reçue entre le moyen de réception (31) et le moyen d'émission (32, 33), et un moyen (35, 36) pour détecter des emplacements vides de cellule entre les cellules reçues afin d'autoriser l'insertion de cellules (CEn) produites par le terminal (TE0n) dans des emplacements vides de cellule détectés.

14. Installation terminale conforme à la revendication 13, dans laquelle, lorsque le terminal (TE0n) est inclus en cascade avec d'autres terminaux (TE01 à TEON) dans une boucle locale numérique (BLO) entre le moyen de diffusion (1) et le moyen de collecte (2), le moyen pour détecter des emplacements vides de cellule (35, 36) compte les emplacements vides détectés modulo un nombre de terminaux dans la boucle entre ledit terminal (TE0n) et le moyen de collecte (2), y compris ledit terminal, afin de n'autoriser l'insertion d'une cellule produite par ledit terminal (TE0n) que dans l'un des emplacements vides de cellule en nombre égal audit nombre de terminaux.

15. Installation terminale conforme à la revendication 14, dans laquelle le moyen pour détecter (35, 36) n'autorise l'insertion d'une cellule produite par ledit terminal (TE0n) en fonction du comptage des emplacements vides détectés que lorsque la fréquence des emplacements vides de cellule est inférieure à un seuil prédéterminé.

16. Installation terminale conforme à l'une quelconque des revendications 12 à 15, dans laquelle un moyen de commutation (30) autorise la réception au moins de cellules de réseau diffusées (CR) par le moyen de réception (31) et l'émission de cellules (CR, CEn) par le moyen d'émission (32, 33) seulement lorsque le terminal (TE0n) est en fonctionnement, et réalise une liaison directe (PIn-POn) pour au moins des cellules de réseau diffusées lorsque le terminal est hors tension.

## Patentansprüche

1. Mit einer Fernmeldeleitung (VR-VE) verbundene Endeinrichtungsanlage, die ATM-Netzzellen übermittelt und Endeinrichtungen umfasst, **dadurch gekennzeichnet, dass** sie ein Verteilmittel (1) enthält, um alle Netzzellen CR, die über einen Empfangsweg (VR) der Fernmeldeleitung empfangen wurden, an die Endeinrichtungen (TE) zu übermitteln, und ein Sammelmittel (2), um Zellen (CE) zu sammeln, die von den Endeinrichtungen (TE) erzeugt wurden, und sie in einen Sendeweg (VE) der Fernmeldeleitung zu übermitteln.

2. Endeinrichtungsanlage nach Patentanspruch 1, in der
das Verteilmittel (1) ein Eingangsmittel (11) zur Regeneration von Netzzellen (CR) enthält, die über den Empfangsweg (VR) in einer digitalen Empfangsverbindung (BR) empfangen werden, und mehrere Ausgangsmittel (120 bis 12(Q-1)), die mit der Empfangsverbindung verbunden sind, um alle regenerierten Zellen in mehrere entsprechende lokale Ringnetze (BLO bis BL(Q-1)) synchron weiterzusenden, die mindestens eine Endeinrichtung umfassen, und
das Sammelmittel (2) mehrere Eingangsmittel (220 bis 22 (Q-1)) enthält, die jeweils mit den lokalen Ringnetzen verbunden sind, um die Zellen (CE) zu synchronisieren und zu regenerieren, die von den entsprechenden Endeinrichtungen (TE) in den Ringnetzen erzeugt werden, mehrere Pufferspeicher (220 bis 22(Q-1)), um die regenerierten Zellen Zelle für Zelle zyklisch an eine digitale Sendeverbindung (BE) zu übermitteln, wobei nur die Pufferspeicher gelesen werden, die pro Zyklus mindestens eine Zelle enthalten, und ein Ausgangsmittel (23) zur Übermittlung der Zellen der digitalen Sendeverbindung in den Sendeweg (VE).

3. Endeinrichtungsanlage nach Patentanspruch 1 oder 2, in der das Verteilmittel (1) ein Mittel (13) zur Markierung der Netzzellen (CR) enthält. die aus dem Empfangsweg (VR) stammen, und das Sammelmittel (2) ein Mittel (24) zur Löschung der markierten Netzzellen (CRM) enthält, die an die Endeinrichtungen verteilt wurden, um sie nicht wieder in den Sendeweg (VE) zu senden.

4. Endeinrichtungsanlage nach den Patentansprüchen 2 und 3, in der das Markierungsmittel (13) zwischen das Eingangsmittel (11) und die genannten mehreren Ausgangsmittel (120 bis 12(Q-1)) in der digitalen Empfangsverbindung (BR) geschaltet ist und den Zustand eines festgelegten Feldes (GFC) im Kopf der Netzzellen (CR) ändert, und dann ein Fehlerprüffeld (HEC) des Kopfes neu berechnet, und das Löschmittel (24) das Schreiben markierter Netzzellen (CRM) in die Pufferspeicher (220 bis 22 (Q-1)) verbietet und nur das Schreiben der nicht-markierten Zellen (CE) zulässt, die von den Endeinrichtungen erzeugt werden, damit sie in den digitalen Sendeweg (BE) übermittelt werden.

5. Endeinrichtungsanlage nach den Patentansprüchen 1 bis 4, ein Mittel (25, 15) enthaltend, um von den Endeinrichtungen erzeugte ATM-Gegensprechzellen (CI) vom Sammelmittel (1i) zum Verteilmittel (2i) zu leiten, um sie mit den empfangenen Netzzellen (CR) zu den Endeinrichtungen zu übermitteln.

6. Endeinrichtungsanlage nach den Patentansprüchen 2 und 5, in der das Leitmittel ein erstes Mittel (11, 16) zur Feststellung leerer Zellenstellen in der digitalen Empfangsverbindung (BR) enthält, ein zweites Mittel (25) zur Feststellung von Gegensprechzellen (CI) in Reaktion auf erste vorbestimmte Adressenfelder (VCI<MT), die in den Zellen der digitalen Sendeverbindung (BE) gelesen wurden, und von Zellen (CE), die von den Endeinrichtungen erzeugt wurden, in Antwort auf zweite festgelegte Adressenfelder (VCl≥MT), die in den Zellen der digitalen Sendeverbindung (BE) gelesen wurden, und einen Pufferspeicher (15), in den die festgestellten Gegensprechzellen (CIM) auf Anweisung des zweiten Feststellungsmittels (25) geschrieben und auf Anweisung des ersten Feststellungsmittels (11, 16) gelesen werden, um sie in leere Zellenstellen in der digitalen Empfangsverbindung (BR) einzufügen.

7. Endeinrichtungsanlage nach Patentanspruch 6, in der jedes Adressenfeld mindestens ein Teil eines Kennungsfeldes eines virtuellen Weges und Kanals (VPI/VCI) im Kopf einer ATM-Zelle ist.

8. Endeinrichtungsanlage nach Patentanspruch 6 oder 7, in der das Leitungsmittel ein Mittel (27) zur Markierung der festgestellten Gegensprechzellen (CI) durch Änderung des Zustandes eines bestimmten Feldes (GFC) im Kopf der Gegensprechzellen enthält, und ein Mittel (27) zur Neuberechnung von Fehlerprüffeldern (HEC) in den Köpfen der Gegensprechzellen.

9. Endeinrichtungsanlage nach Patentanspruch 8, in der das Leitungsmittel ein Mittel (27) zur Übersetzung erster Adressenfelder (VCl<MT) der festgestellten Gegensprechzellen (CI) in zweite Adressenfelder (VCI≥MT) entsprechend einer Anschlusstabelle enthält.

10. Endeinrichtungsanlage nach irgendeinem der Patentansprüche 4, 8 oder 9, in der das vorbestimmte Feld mindestens ein Teil eines Datenflusssteuerungsfeldes (GFC) ist.

11. Endeinrichtungsanlage nach irgendeinem der Patentansprüche 1 bis 10, in der das Verteilmittel (1) und das Sammelmittel (2) durch digitale lokale Ringnetze verbunden sind, in denen alle empfangenen Netzzellen (CR) verteilt werden, wobei mindestens eins der Ringnetze eine Endeinrichtung (TE20) oder mehrere Endeinrichtungen (TE00 bis TE0(N-1)) in Reihe geschaltet enthält und/oder mindestens eine andere Einheit aus Verteilmittel und Sammelmittel (1a-2a, 1b-2b).

12. Endeinrichtungsanlage nach irgendeinem der Patentansprüche 1 bis 11, in der jede Endeinrichtung (TE0n) mit einem Empfangsmittel (31) verbunden ist, um mindestens die verteilten Netzzellen (CR) zu empfangen, einem Mittel (34, 35, 36) zum Einfügen von Zellen (CEn), die von der Endeinrichtung (TE0n) erzeugt wurden, anstatt leerer Zellenstellen zwischen den empfangenen Zellen und einem Sendemittel (32, 33) zum Senden der empfangenen und der von der Endeinrichtung erzeugten Zellen zum Sammelmittel (2).

13. Endeinrichtungsanlage nach Patentanspruch 12, in der das Einfügungsmittel für jede Endeinrichtung (TE0n) ein Mittel (34, 36) zur Feststellung der empfangenen Zellen umfasst, um die Sendung jeglicher vom Endgerät erzeugter Zellen (CEn) während der Übertragung einer empfangenen Netzzelle zwischen dem Empfangsmittel (31) und dem Sendemittel (32, 33) zu verbieten, und ein Mittel (35, 36) zur Feststellung leerer Zellenstellen zwischen den empfangenen Zellen, um das Einfügen von von der Endeinrichtung (TE0n) erzeugten Zellen (CEn) in festgestellte leere Zellenstellen zu erlauben.

14. Endeinrichtungsanlage nach Patentanspruch 13, in der in dem Fall, dass die Endeinrichtung (TE0n) mit anderen Endeinrichtungen (TE01 bis TE0N) in einem digitalen lokalen Ringnetz (BL0) zwischen dem Verteilmittel (1) und dem Sammelmittel (2) in Reihe geschaltet ist, das Mittel zur Feststellung leerer Zellenstellen (35, 36) die festgestellten leeren Stellen modulo einer Zahl von Endeinrichtungen im Ringnetz zwischen der genannten Endeinrichtung (TE0n) und dem Sammelmittel (2) einschließlich der genannten Endeinrichtung zählt, um das Einfügen einer von der genannten Endeinrichtung (TE0n) erzeugten Zelle nur an einer der leeren Zellenstellen in gleicher Anzahl zu erlauben, wie der Anzahl von Endeinrichtungen.

15. Endeinrichtungsanlage nach Patentanspruch 14, in der das Feststellungsmittel (35, 36) das Einfügen einer von der genannten Endeinrichtung (TE0n) erzeugten Zelle in Abhängigkeit von der Zählung der festgestellten leeren Stellen nur erlaubt, wenn die Frequenz der leeren Zellenstellen unter einem festgelegten Schwellenwert liegt.

16. Endeinrichtungsanlage nach irgendeinem der Patentansprüche 12 bis 15, in der ein Schaltmittel (30) den Empfang mindestens von verteilten Netzzellen (CR) durch das Empfangsmittel (31) und das Senden von Zellen (CR, CEn) durch das Sendemittel (32, 33) nur erlaubt, wenn die Endeinrichtung (TE0n) in Betrieb ist, und eine Direktverbindung (PIn-POn) mindestens für verteilte Netzzellen herstellt, wenn die Endeinrichtung abgeschaltet ist.

## Claims

1. A terminal installation connected to a telecommunication line (VR-VE) conveying network cells in ATM mode and comprising terminals, **characterized in that** it comprises broadcast means (1) for broadcasting all the network cells (CR) received via a receive channel (VR) of the telecommunication line to the terminals (TE) and collection means (2) for collecting cells (CE) produced by the terminals (TE) and transmitting them in an emit channel (VE) of the telecommunication line.

2. A terminal installation according to claim 1, wherein
the broadcast means (1) comprises input means (11) for regenerating network cells received (CR) via the receive channel (VR) in a receive digital link (BR), and plural output means (120 to 12 (Q-1)) connected to the receive link for retransmitting synchronously all cells respectively regenerated into plural local loops (BLO to BL(Q-1)) including at least one terminal, and
the collection means (2) comprises plural input means (220 to 22 (Q-1)) respectively connected to local loops for synchronizing and regenerating cells (CE) produced by the respective terminals (TE) in the loops, plural buffer memories (220 to 22 (Q-1)) for cyclically transmitting the regenerated cells in an emit digital link (BE) cell by cell by reading only the buffer memories containing at least one cell per cycle, and output means (23) for transmitting cells from the send digital link in the send channel (VE).

3. A terminal installation according to claim 1 or 2, wherein the broadcast means (1) comprises means (13) for marking network cells (CR) from the receive channel (VR), and the collection means (2) comprises means (24) for eliminating marked network cells (CRM) broadcast to the terminals in order for them not to be retransmitted in the emit channel (VE).

4. A terminal installation according to claims 2 and 3, wherein the marking means (13) is connected between the input means (11) and said plural output means (120 to 12 (Q-1)) in the receive digital link (BR), and modifies the state of a predetermined field (GFC) in the header of network cells (CR), then recalculates an error control field (HEC) of the header, and the eliminating means (24) prohibits writing of the marked network cells (CRM) in the buffer memories (220 to 22 (Q-1)) and authorizes writing only of the unmarked cells (CE) produced by the terminals so that they are transmitted in the emit digital link (BE).

5. A terminal installation according to claims 1 to 4, comprising means (25, 15) for switching ATM intercommunication cells (CI) produced by the terminals, from the collection means (1i) to the broadcast means (2i) in order to broadcast them to the terminals with the received network cells (CR).

6. A terminal installation according to claims 2 and 5, wherein the switching means comprises first means (11, 16) for detecting empty cell locations in the receive digital link (BR), second means (25) for detecting intercommunication cells (CI) in response to predetermined first addressing fields (VCI < MT) read in cells from the send digital link (BE) and cells (CE) produced by the terminals in response to predetermined second addressing fields (VCI ≥ MT) read in cells from the emit digital link (BE), and a buffer memory (15) in which detected intercommunication cells (CIM) are written under the control of the second detecting means (25) and read under the control of the first detecting means (11, 16) thereby introducing them into empty cell locations in the receive digital link (BR).

7. A terminal installation according to claim 6, wherein each addressing field is at least a portion of a virtual path and virtual channel identifier field (VPI/VCI) in the header of an ATM cell.

8. A terminal installation according to claim 6 or 7, wherein the switching means comprises means (27) for marking the detected intercommunication cells (CI) by modifying the state of a predetermined field (GFC) in the header of the intercommunication cells, and means (27) for recalculating error control fields (HEC) in headers of the intercommunication cells.

9. A terminal installation according to claim 8, wherein the switching means comprises means (27) for translating first addressing fields (VCI < MT) of the detected intercommunication cells (CI) into second addressing fields (VCI ≥ MT) in accordance with a mapping table.

10. A terminal installation according to any one of claims 4, 8 or 9, wherein the predetermined field is at least a portion of a flow control field (GFC).

11. A terminal installation according to any one of claims 1 to 10, wherein the broadcast means (1) and the collection means (2) are connected by digital local loops in which all received network cells (CR) are broadcast, at least one of the loops including a terminal (TE20), or plural terminals (TE00 to TE0 (N-1)) in cascade, and/or at least one other set of broadcast means and collection means (1a-2a, 1b-2b).

12. A terminal installation according to any one of claims 1 to 11, wherein each terminal (TE0n) is connected to receiver means (31) for receiving at least broadcast network cells (CR), means (34, 35, 36) for inserting cells (CEn) produced by the terminal (TE0n) instead of empty cell locations between received cells, and emitter means (32, 33) for emitting received cells and cells produced by the terminal to the collection means (2).

13. A terminal installation according to claim 12, wherein the inserting means for each terminal (TE0n) comprises means (34, 36) for detecting received cells thereby prohibiting the emitting of any cell (CEn) produced by the terminal during the transfer of a received network cell between the receiver means (31) and the emitter means (32, 33), and means (35, 36) for detecting empty cell locations between received cells thereby authorizing insertion of cells (CEn) produced by the terminal (TE0n) into detected empty cell locations.

14. A terminal installation according to claim 13, wherein, if the terminal (TE0n) is included in cascade with other terminals (TE01 to TEON) in a digital local loop (BLO) between the broadcast means (1) and the collection means (2), the empty cell location detecting means (35, 36) counts detected empty locations modulo a number of terminals in the loop between said terminal (TE0n) and the collection means (2), including said terminal, in order to authorize insertion of a cell produced by said terminal (TE0n) only into one of empty cell locations whose number is equal to said number of terminals

15. A terminal installation according to claim 14, wherein the detecting means (35, 36) authorizes insertion of a cell produced by said terminal (TE0n) as a function of the counted number of the detected empty locations only if the frequency of the empty cell locations is below a predetermined threshold.

16. A terminal installation according to any one of claims 12 to 15, wherein switching means (30) authorizes reception of at least broadcast network cells (CR) by the receiver means (31) and emission of cells (CR, CEn) by the emitter means (32, 33) only when the terminal (TE0n) is switched on, and makes a direct connection (PIn-P0n) for at least broadcast network cells when the terminal is switched off.
